Europäisches Patentamt

(19) European Patent Office

Office européen des brevets

(11) Numéro de publication: **0 116 946**
**A1**

(12) **DEMANDE DE BREVET EUROPEEN**

(21) Numéro de dépôt: **84101545.6**

(22) Date de dépôt: **16.02.84**

(51) Int. Cl.³: **F 28 B 9/10**
**B 01 D 19/00**

(30) Priorité: **22.02.83 FR 8302854**

(43) Date de publication de la demande:
**29.08.84 Bulletin 84/35**

(84) Etats contractants désignés:
**BE CH DE FR GB IT LI NL SE**

(71) Demandeur: **DELAS-WEIR**
**12-14, rue d'Alsace**
**F-92300 Levallois-Perret(FR)**

(72) Inventeur: **Andrieux, Bernard**
**7, avenue Pierre Grenier**
**F-92100 Boulogne(FR)**

(74) Mandataire: **Weinmiller, Jürgen et al,**
**Zeppelinstrasse 63**
**D-8000 München 80(DE)**

(54) Dispositif de dégazage de condensats de vapeur d'eau installé dans un puits de condenseur de centrale électrique.

(57) Le dispositif comprend des plateaux (8, 9) de recueil des condensats, un bac (10) recevant l'eau tombant des plateaux, un dispositif de réchauffage situé au fond du bac, constitué par une tuyauterie (14) alimentée en vapeur à moyenne pression, la vapeur s'échappant par des rangées (14, 16) de trous et se condensant dans l'eau du bac, ledit bac comportant à sa partie supérieure au moins un déversoir (11) vers le fond du puits (7) du condenseur, et comportant en outre au moins un dispositif additionnel de dégazage, caractérisé en ce qu'il est situé à un niveau légèrement supérieur audit dispositif de réchauffage et constitué par une tuyauterie (17) horizontale, ladite tuyauterie comportant sur toute sa longueur, du côte dudit déversoir (11), une zone perforée (19) et étant parcourue par de la vapeur à très basse pression mais légèrement supérieure à la pression du condenseur, ladite zone perforée permettant à la partie inférieure de la section de la tuyauterie (17) d'être remplie en eau du bac et permettant à la vapeur de s'échapper de la tuyauterie hors du bac, la partie supérieure de ladite zone perforée étant située à un niveau légèrement inférieur à celui dudit déversoir.

FIG.2

Dispositif de dégazage de condensats de vapeur d'eau installé dans un puits de condenseur de centrale électrique.

La présente invention concerne un dispositif de dégazage de condensats de vapeur d'eau, installé dans un puits de condenseur de centrale électrique.

Il est en effet nécessaire de diminuer le plus possible la quantité d'oxygène dissous dans l'eau alimentant les générateurs de vapeur des centrales nucléaires car actuellement, l'eau à la sortie des condenseurs de vapeur n'est pas suffisamment dégazée et détériore ces générateurs de vapeurs.

La plupart des centrales nucléaires en effet ne possèdent pas de dégazeur qui sont des appareils très coûteux et encombrants.

Le document FR-A 2.229.031 décrit un dispositif de dégazage installé dans un puits de condenseur. Il comporte trois étages : Le premier étage est constitué par des plateaux qui reçoivent l'eau condensée et qui dirigent cette eau vers deux caissons situés au fond du puits, à l'une des extrémités et à l'autre du condenseur, cette eau tombant dans les caissons étant traversée par de la vapeur située entre ces plateaux et le plan d'eau dans le puits. Le deuxième étage est constitué par un moyen d'injection de vapeur à la base de chaque caisson. Enfin le troisième étage est constitué par un déversoir situé à la partie supérieure du caisson, de telle sorte que l'eau qui se déverse passe devant une rampe pourvue de fentes, la rampe étant alimentée en vapeur en régime sonique.

Cependant, cette disposition n'améliore qu'insuffisamment les conditions de dégazage des condensats. L'effet du troisième étage est peu important, le mélange de la vapeur avec l'eau qui se déverse est peu intime.

La présente invention a pour but d'améliorer les conditions de dégazage dans les installations de centrales électriques ne comportant pas de dégazeur.

L'invention a donc pour objet un dispositif de dégazage de condensats, installé dans un puits de condenseur de centrale électrique, comprenant des plateaux de recueil de condensats, un bac recevant l'eau tombant des plateaux, un dispositif de réchauffage situé au fond du bac, constitué par une tuyauterie alimentée en vapeur à moyenne pression, la vapeur s'échappant par des rangées de trous et se condensant dans l'eau du bac, ledit bac comportant à sa partie supérieure au moins un déversoir vers le fond du puits, et comportant en outre au moins un dispositif additionnel de dégazage, caractérisé en ce que ce dispositif additionnel de dégazage est situé à un niveau légèrement supérieur audit dispositif de réchauffage et constitué par une tuyauterie horizontale, ladite tuyauterie comportant sur toute sa longueur, du côté dudit déversoir, une zone perforée et étant parcourue par de la vapeur à très basse pression mais légèrement supérieure à la pression du condenseur, ladite zone perforée permettant à la partie inférieure de la section de la tuyauterie d'être remplie en eau du bac et permettant à la vapeur de s'échapper de la tuyauterie hors du bac, la partie supérieure de ladite zone perforée étant située à un niveau légèrement inférieure à celui dudit déversoir.

L'invention sera bien comprise à la lumière de la description d'un exemple de réalisation de l'invention, faite ci-après en regard du dessin annexé dans lequel :

La figure 1 donne très schématiquement une disposition générale d'un condenseur.

La figure 2 est une vue partielle montrant en coupe le dispositif de dégazage selon l'invention.

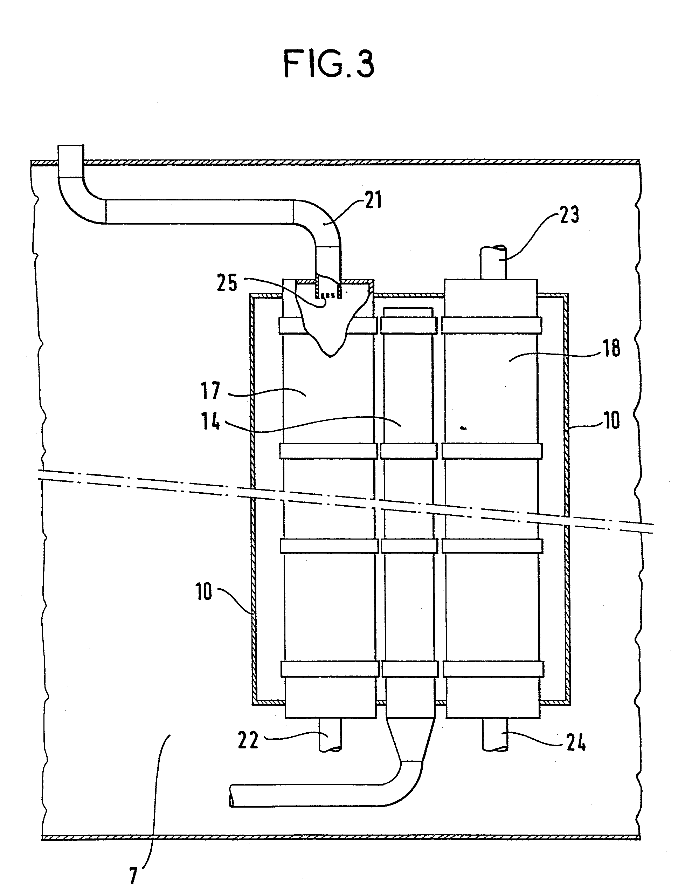

La figure 3 montre en vue de dessus certains éléments du dispositif de dégazage de la figure 2.

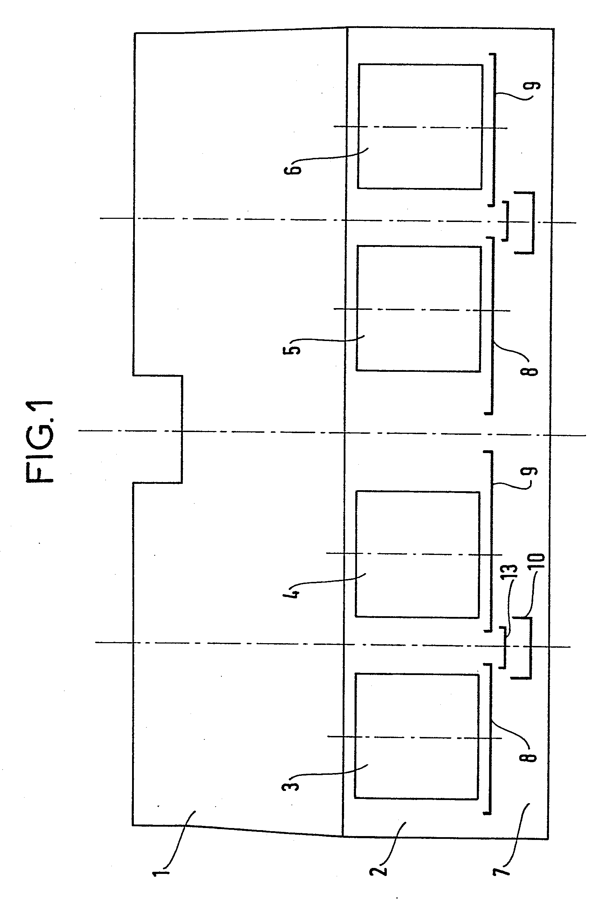

La figure 1 montre une disposition générale d'un condenseur comprenant trois parties principales : une manchette 1 de raccordement à la turbine non représentée, un corps de condenseur 2 comportant quatre faisceaux 3, 4, 5, 6 de tubes échangeurs, et un puits de condenseur 7 récoltant les condensats.

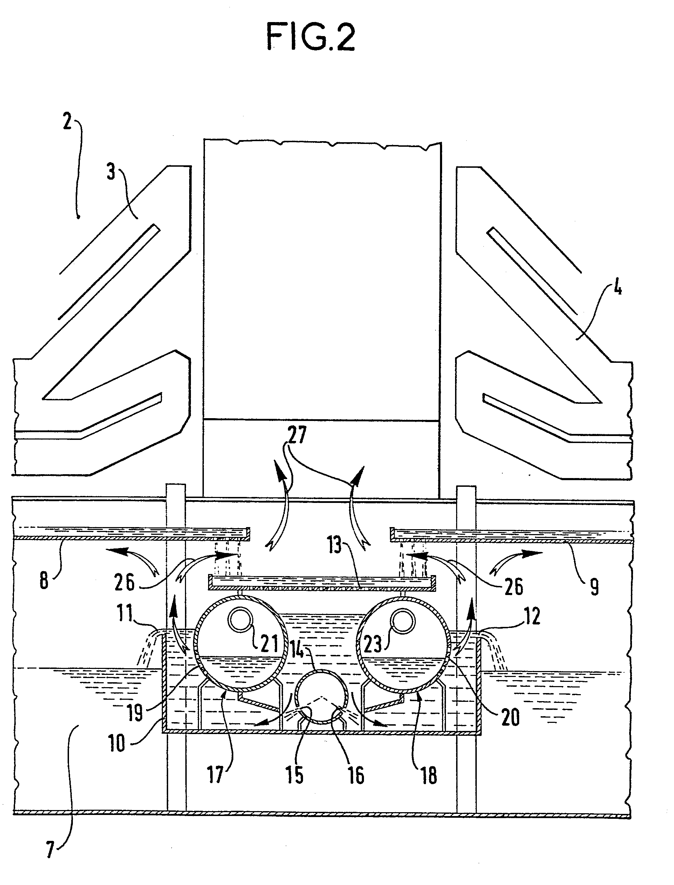

Sur la figure 2 qui est une vue partielle, on voit une partie seulement du corps 2 montrant une partie du faisceau 3 et du faisceau 4 et une partie du puits 7 dans lequel se trouve un dispositif de dégazage selon l'invention. Un autre dispositif de dégazage, identique, est situé dans le puits, entre, et sous les faisceaux 5 et 6. La description qui va suivre est faite pour le dispositif de dégazage situé sous les faisceaux 3 et 4.

Par ailleurs, les valeurs numériques données partent de l'exemple non limitatif d'une centrale de 900 MW ayant 3000 t/h de vapeur à condenser à pleine charge soit 1200 t/h à 40% de la charge.

On suppose que la pression de vapeur de condensation à 40% de la charge est de 35 millibars.

Les condensats sont recueillis par des plateaux 8, 9, perforés à leur extrémité située entre les faisceaux 3 et 4, et alimentant un dispositif de dégazage à trois étages, placé dans un bac 10 comportant des déversoirs 11 et 12. Le premier étage est constitué par un plateau supérieur perforé 13 de distribution ; Le deuxième par un dispositif inférieur 14 de réchauffage de l'eau, en forme de cylindre, alimenté en vapeur à moyenne pression (10 bars et 5 t/h) la vapeur s'en échappant par deux rangées 15, 16 de trous situés vers la partie inférieure ; enfin le troisième étage qui est un dispositif additionnel de dégazage comprend un ensemble de deux cylindres 17, 18 situés à un niveau légèrement supérieur, et de plus grand diamètre. Ces cylindres 17, 18 sont chacun perforés, du côté du déversoir le plus proche, sur toute leur longueur, sur une zone 19 (20 pour le cylindre 18) dont la partie supérieure est située à un niveau légèrement inférieur à celui du déversoir correspondant 11 (12 pour le cylindre 18).

Ces cylindres sont parcourus par de la vapeur basse pression à 45 mb et ils sont alimentés par de la vapeur moyenne pression à 10 bars avec un débit de 5 t/h par cylindre par des conduites 21, 22, 23, 24 à travers des diaphragmes de détente tel que 25. Une vanne, non représentée, située en amont par rapport au diaphragme 25, permet de régler plus ou moins le débit et donc la pression dans les conduites 17 et 18, de 35 mb, si telle est par exemple la pression dans le puits du condenseur, lorsque le débit est nul, à 45 mb à plein débit, ce qui permet de régler le système de dégazage en fonction des besoins.

Le fonctionnement est le suivant : l'eau, aux environs de 28°C, qui tombe des plateaux 8, 9 vers le plateau 13 est traversée par le flux de vapeur, flèches 26, sortant des cylindres 17, 18 par les perforations des zones 10 et 20, ce qui provoque un premier dégazage avec un réchauffage partiel de l'eau si elle est sous-refroidie. Cette eau tombe ensuite dans la partie centrale et est réchauffée d'environ 4°C par la vapeur sortant par les rangées de trous 15, 16 du cylindre inférieur 14. La vapeur sortant de ces trous se condense du fait de la pression et l'eau monte alors à l'intérieur du bac pour s'échapper par les déversoirs 11, 12 et tombe dans le fond du puits 7. Pendant la remontée, de la vapeur se dégage de l'eau précédemment réchauffée et se mélange avec la vapeur sortant des zones perforées 19 et 20.

Par ailleurs, un peu en dessous du niveau des déversoirs 11, 12, de la vapeur à basse pression est envoyée à environ 200 m/s par les perforations 19, 20 des tubes 17, 18. Cette vapeur crée une émulsion qui a pour effet de diviser l'eau et d'achever son réchauffage de façon à ce qu'il n'y ait pas de différence entre la température de saturation correspondant à la pression au-dessus du niveau du puits (35 millibars) et l'eau projetée.

L'oxygène est de ce fait retirée de l'eau et évacué vers le faisceau du condenseur (flèches 27) par la vapeur.

la section de passage entre les plateaux 8, 9 est calculée en fonction du débit de la vapeur de dégazage. Du fait de la configuration des plateaux 8, 9 et des vitesses de la vapeur, il ne peut pas y avoir d'accumulation d'air au dessus du niveau du puits.

0116946

REVENDICATIONS

1/ Dispositif de dégazage de condensats de vapeur d'eau, installé dans un puits (7) de condenseur de centrale électrique, comprenant des plateaux (8, 9) de recueil des condensats, un bac (10) recevant l'eau tombant des plateaux, un dispositif de réchauffage situé au fond du bac, constitué par une tuyauterie (14) alimentée en vapeur à moyenne pression, la vapeur s'échappant par des rangées (15, 16) de trous et se condensant dans l'eau du bac, ledit bac comportant à sa partie supérieure au moins un déversoir (11) vers le fond du puits du condenseur, et comportant en outre au moins un dispositif additionnel de dégazage, caractérisé en ce que ce dispositif additionnel de dégazage est situé à un niveau légèrement supérieur audit dispositif de réchauffage et constitué par une tuyauterie (17) horizontale, ladite tuyauterie comportant, sur toute sa longueur, du côté dudit déversoir (11) une zone perforée (19) et étant parcourue par de la vapeur à très basse pression mais légèrement supérieure à la pression du condenseur, ladite zone perforée permettant à la partie inférieure de la section de la tuyauterie (17) d'être remplie en eau du bac et permettant à la vapeur de s'échapper de la tuyauterie hors du bac, la partie supérieure de ladite zone perforée étant située à un niveau légèrement inférieur à celui dudit déversoir.

2/ Dispositif selon la revendication 1, caractérisé en ce qu'il comprend deux dits dispositifs additionnels (17, 18) situés respectivement de part et d'autre du dispositif de réchauffage (14), ledit bac comportant deux dits déversoirs (11, 12).

3/ Dispositif selon la revendication 1, caractérisé en ce qu'un plateau de distribution perforé (13) reçoit l'eau tombant desdits plateaux de recueil (8, 9).

FIG.1

0116946

# FIG.2

# FIG.3

## Office européen
des brevets

**RAPPORT DE RECHERCHE EUROPEENNE**

**0116946**
Numéro de la demande

EP 84 10 1545

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,X | FR-A-2 229 031 (ELECTRO-MECANIQUE) * En entier * | 1 | F 28 B 9/10 B 01 D 19/00 |
| Y | | 3 | |
| Y | US-A-2 558 222 (PARKINSON) * Colonne 2, lignes 32-39; figures 1,2 * | 2,3 | |
| A | FR-A- 805 546 (CONDENSATION) * Page 2, lignes 49-74; figure 2 * | 2,3 | |
| A | US-A-2 663 547 (EVANS et al.) | | |
| A | US-A-2 956 784 (PARKINSON) | | |
| A | US-A-3 698 476 (WYZALEK et al.) | | |

**DOMAINES TECHNIQUES RECHERCHES (Int. Cl. ³)**

F 28 B
B 01 D

Le présent rapport de recherche a été établi pour toutes les revendications

| Lieu de la recherche | Date d'achèvement de la recherche | Examinateur |
|---|---|---|
| LA HAYE | 24-05-1984 | FILTRI G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82